# EUROPEAN PATENT SPECIFICATION

(11) **EP 0 523 975 B1**
(45) Date of publication and mention of the grant of the patent: **02.01.1997**
(21) Application number: 92306473.7
(22) Date of filing: 15.07.1992
(51) Int. Cl.: B60S 1/38

(54) **Windscreen wiper blade**
Scheibenwischerblatt
Balai d'essuie-glaces

(30) Priority: 19.07.1991 GB 9115611
(43) Date of publication of application: 20.01.1993
(73) Proprietor: TRICO LIMITED, Gwent NP4 0XZ, Wales (GB)
(72) Inventor: Mower, Peter, Whitton, Twickenham, Middlesex (GB)
(74) Representative: James, Michael John Gwynne

(56) References cited:
- EP-A- 0 012 251
- DE-A- 1 655 984
- DE-A- 2 640 841
- US-A- 4 658 463

## Description

This invention relates to a windscreen wiper blade.

In the manufacture of windscreen wiper blades, it is common practice for the blade rubber, i.e. that part of the blade in contact with the windscreen to be made of moulded rubber, either synthetic or natural. Such methods have the disadvantage that the formation of flash on the blade rubber is inherent in the moulding operation. Trimming of flash is a difficult operation in any event but is much more so if the material to be trimmed is rubber. Furthermore, the amount of flash will also depend on the wear in the mould, and if this flash has to be kept to an absolute minimum, the mould will need to be constantly refurbished, making the manufacturing operation considerably more expensive.

Unfortunately, the presence of flash on the blade rubber interferes with the smooth operation of most windscreen wiper blades. Windscreen wiper blades today comprise a blade rubber carrier or harness comprising a number of levers or yokes articulated together in a stepped or family tree like formation and this provides a number of free ends of the levers and blades which are provided with claws which engage around parts of the blade rubber so as to secure the blade rubber to the harness but allow movement of the blade to a certain extent in the longitudinal direction to enable it to follow the curvature of the windscreen which is present in modern cars without buckling. If flash is present on the blade rubber, then this freedom of movement within the claws can be negated or, at the very least, substantially reduced.

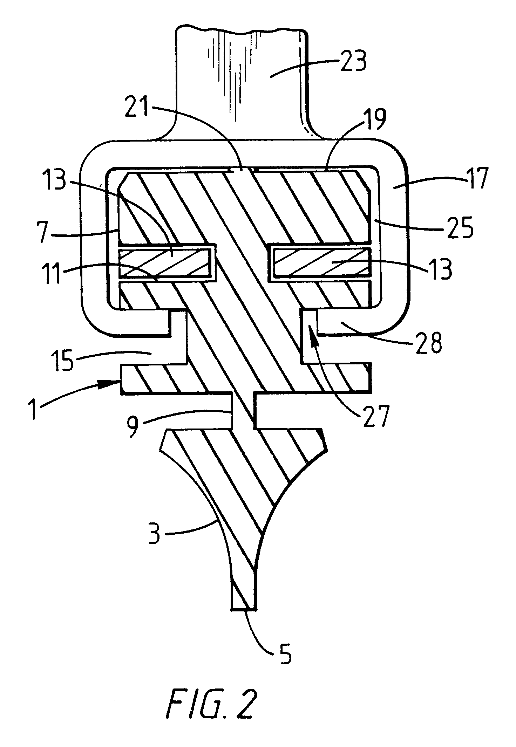

The present invention seeks to provide a windscreen wiper blade which is so constructed as to minimise any effect flash on the blade rubber might have without making the construction unwieldy and without the necessity of accurately trimming flash from the blade rubber. The problem arising from conventional prior art practice is illustrated in the accompanying Figure 2 of the drawings which shows how the flash 21 would interfere with the upper face of the claw 17 if the flash is left in place on the blade rubber 7.

According to the invention, a windscreen wiper blade comprises a moulded blade rubber having a flash left from the moulding thereof and a harness including a number of yokes and/or levers articulated together and having, at free ends thereof, pairs of claws engaging around the part of the blade rubber, wherein the claws of a pair define between them a channel and a groove or slot is formed in the base of the channel and is aligned with the flash with clearance so that the blade is free to slide longitudinally in a claw.

Preferably the blade rubber is moulded such that the flash is positioned projecting from the opposite face of the blade rubber to a lip for engaging the windscreen.

The claws may have a generally overhung channel section, a part of the blade rubber residing in the channel while the working part of the blade rubber projects therefrom. The recess or slot may be formed centrally in the base of the channel section and be oriented longitudinally of the length of the blade rubber, the channel being open at both ends.

One of the claws may be provided without the slot or recess so that the movement of the blade rubber in this claw is restricted, preventing the blade rubber from being accidentally removed from the blade harness.

The invention will now be described in greater detail, by way of example, with reference to the drawings, in which:-
Figure 1 is a perspective view of a section of blade rubber showing the formation of flash thereon;
Figure 2 is an end view of a blade claw of known construction with the blade rubber of Fig 1 therein (shown in section);
Figure 3 is s view similar to figure 2 but having a claw in accordance with a first embodiment of the invention;
Figure 4 is a perspective view of the claw of figure 3 taken from underneath, and
Figure 5 is a view similar to figure 3 but showing a different construction of claw in accordance with a second embodiment of the invention.

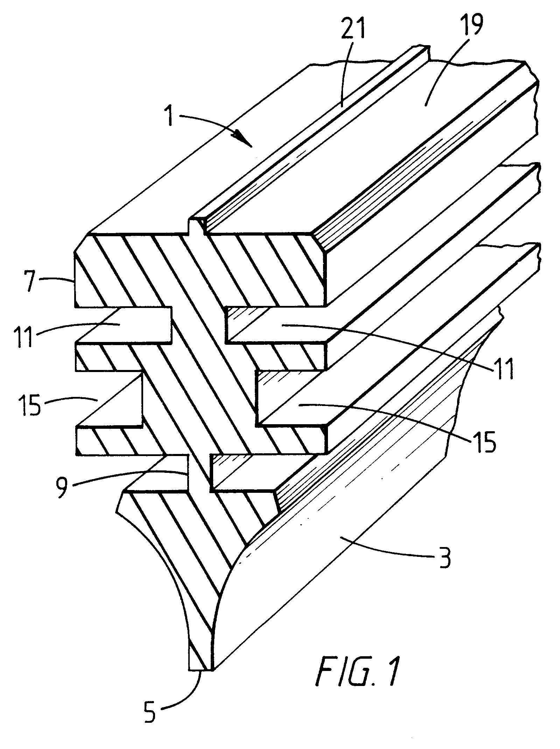

Referring firstly to figure 1, there is shown a portion of a length of moulded blade rubber 1 having a lower part 3 at one end of which is a lip 5 for engagement with a windscreen. This lower part 3 is connected to an upper part 7 by a thin neck section 9. This neck 9 allows the blade to twist from side to side in accordance with the direction of movement of the windscreen wiper blade across the windscreen.

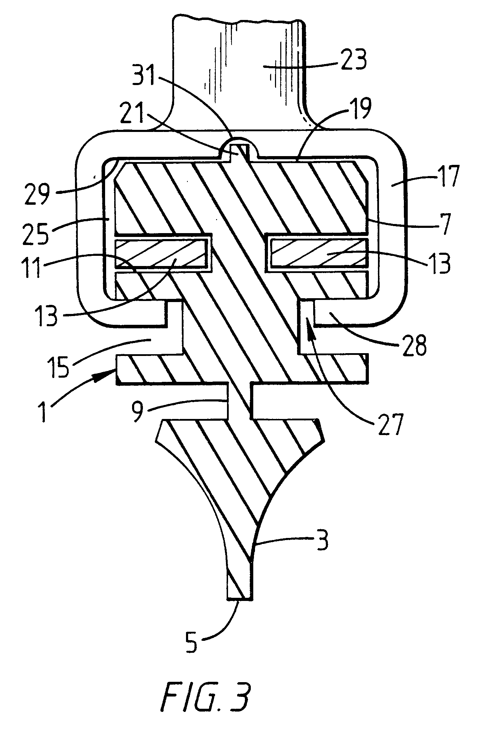

The upper part 7 forms the major mass of the blade rubber and is used for tensioning and securing purposes. To this end it has a pair of slots 11 towards the upper end for receiving strips 13 (see figures 2 and 3) of metal forming a so called twin rail vertebra. It also has a lower pair of slots 15 for receiving the ends of blade claws 17 (see figures 2 to 4).

The flatness of the upper surface 19 of the blade rubber 1 is marred by an upstanding rib 21 which comprises flash which is left from moulding the blade rubber and which in the usual construction of wiper blade needs to be removed.

Figure 2 shows the effect of inserting the blade rubber 1 with the flash rib 21 still present. As can be seen from this figure, the claw 17 which is provided on the free end 23 of one of the yokes or levers making up a blade harness, has a channel like construction 25 in which the upper part 7 of the blade rubber 1 sits, the mouth 27 of the channel 25 being overhung and having two inwardly projecting portions 28 which are adapted to engage in the slots 15 in the upper part 7 of the blade rubber 1 so as to retain the blade rubber 1 in the channel 25 of the claw 17.

In this figure can also be seen, in section, the metal strips 13 of the twin rail vertebra.

As can be seen, at least in a vertical direction as seen in the drawings, the upper part 7 of the blade rubber 1 is a fairly tight fit in the channel 25, just sufficient clearance being left to allow longitudinal movement of the blade rubber 1 relative to the claw 17. However, such an arrangement is defeated by the existence of the flash rib 21 which is squashed against the base 29 of the channel 25, thus wedging the blade rubber 1 tightly in the channel and effectively preventing any relative longitudinal movement between the blade rubber 1 and the claw 17.

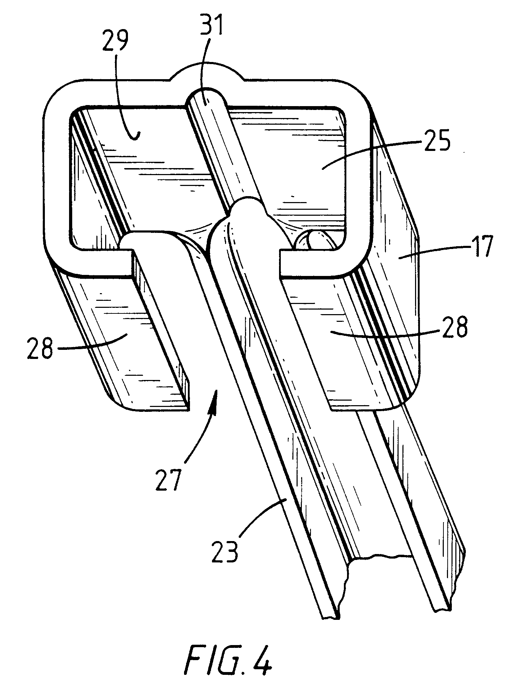

Figures 3 and 4 show how the invention overcomes this problem. To this end, the central part of the base 29 of the channel 25 is pressed outwardly so as to form a recess or slot 31 positioned to register with the flash rib 21. Thus, the flash rib 21 seats in the groove or slot 31 with clearance and the blade rubber 1 is again free to slide longitudinally in the claw 17.

Since, it is necessary to anchor the blade rubber to the harness at one point, so as to prevent accidental removal while still allowing suitable flexure of the blade rubber, one of the claws 17 on the blade harness may be made without the groove 31 to provide this attachment. However, numerous other methods can be used for securing the blade rubber to the blade harness, and, in that event, all claws may have identical constructions.

The slot or recess 31 in the channel base 29 can suitably be formed during the forming process of the yokes and/or levers. If the yokes or levers are fabricated from sheet metal, the groove 31 may be formed during pressing and forming operations but if plastics yokes and/or levers are used, the groove 31 will usually be produced during the moulding operation.

It will be appreciated that the groove 31 is formed significantly larger than the flash ridge 21 so as to be able to accommodate varying sizes of flash since the amount of flash may well depend on the state of the mould being used for moulding the rubber.

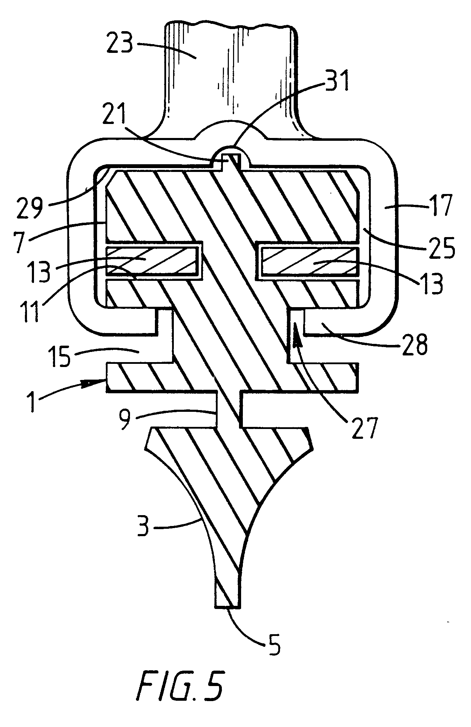

Figure 5 shows a second embodiment of the invention in which, instead of forming the recess or slot 31 by pressing out the base 29 of the channel 25, the recess or slot is actually formed in the base so that the outer surface of the base of the claw remains smooth.

It will be appreciated that various modifications may be made to the above described embodiment without departing from the scope of the invention. For example, if the blade rubber should be made from a mould producing a different flash pattern, the position of the groove 31 may be varied accordingly. While the shape of the groove 31 as shown is of part circular section, it will be clear that rectangular or other shaped grooves could equally well be used.

## Claims

1. A windscreen wiper blade comprising a moulded blade rubber (1) having a flash (21) left from the moulding thereof and a harness including a number of yokes and/or levers articulated together and having, at free end£ thereof, pairs of claws (17) engaging around the part of the blade rubber (1), characterised in that the claws (17) of a pair define between them a channel (25) and a groove or slot (31) is formed in the base (29) of the channel (25) and is aligned with the flash (21) with clearance so that the blade (1) is free to slide longitudinally in a claw.

2. A windscreen wiper blade as claimed in Claim 1, characterised in that the blade rubber (1) is moulded such that the flash (21) is positioned projecting from the opposite face of the blade rubber (1) to a lip (5) for engaging the windscreen.

3. A windscreen wiper blade as claimed in Claim 1 or Claim 2, characterised in that the claws (17) have a generally overhung channel section (25), a part (7) of the blade rubber (1) residing in the channel (25) while the working part (3) of the blade rubber (1) projects therefrom.

4. A windscreen wiper blade as claimed in Claim 3, characterised in that the recess or slot (31) is formed centrally in the base (29) of the channel section (25) and is oriented longitudinally of the length of the blade rubber (1), the channel (25) being open at both ends.

5. A windscreen wiper blade as claimed in Claim 4, characterised in that one of the claws (17) is provided without the slot or recess (31) so that the movement of the blade rubber (1) in this claw (17) is restricted, preventing the blade rubber (1) from being accidentally removed from the blade harness.

6. A windscreen wiper blade as claimed in claim 4 or 5, **characterised in that** the recess or slot (31)is inset into the channel (25) of the claw (17) so that the exterior of the claw (17) is unaffected.

7. A windscreen wiper blade as claimed in claim 4 or 5, **characterised in that** the harness levers are formed of sheet metal and the slot or recess (31) is formed by deforming the metal sheet.

## Patentansprüche

1. Scheibenwischer mit einem geformten Gummiblatt (1), welches einen von dem Formvorgang herrührenden Grat (21) besitzt und einem Bügel mit einer Anzahl von Abstandhaltern und/oder Hebeln, die aneinander angelenkt sind und an ihren freien Enden Paare von Klauen (17) tragen, die einen Teil des Gummiblattes (1) umgreifen,
**dadurch gekennzeichnet**,
daß die Klauen (17) eines Paares zwischen sich einen Kanal (25) definieren und eine Nut oder ein Schlitz (31) am Quersteg (29) des Kanals (55) ausgebildet ist, der auf den Grat (21) ausgerichtet ist mit einem Spiel, so daß das Blatt (1) in seiner Längsrichtung frei verschiebbar in einer Klaue gehalten ist.

2. Scheibenwischer nach Anspruch 1, dadurch gekennzeichnet, daß das Gummiblatt (1) derart geformt ist, daß der Grat (21) derart positioniert ist, daß er sich von der Lippe (5), die mit der Scheibe in Eingriff steht, gegenüberliegenden Fläche des Gummiblattes (1) erhebt.

3. Scheibenwischer nach Anspruch 1 oder Anspruch 2, dadurch gekennzeichnet, daß die Klauen (17) einen allgemein vorspringenden Kanalabschnitt (25) tragen, wobei ein Teil (7) des Gummiblattes (1) in dem Kanal (25) aufgenommen ist, während der Arbeitsbereich (3) des Gummiblattes (1) hieraus vorspringt.

4. Scheibenwischer nach Anspruch 3, dadurch gekennzeichnet, daß die Ausnehmung oder der Schlitz (31) mittig in dem Quersteg (29) des Kanalabschnittes (25) ausgebildet und in Längsrichtung zur Länge des Gummiblattes (1) orientiert ist, wobei der Kanal (25) an beiden Enden offen ist.

5. Scheibenwischer nach Anspruch 4, dadurch gekennzeichnet, daß eine der Klauen (17) ohne den Schlitz oder die Ausnehmung (31) ausgebildet ist, so daß die Bewegung des Gummiblattes (1) in dieser Klaue (17) verhindert ist zur Verhinderung des zufälligen Herausschiebens des Gummiblattes (1) aus dem Bügel.

6. Scheibenwischer nach einem der Ansprüche 4 oder 5, dadurch gekennzeichnet, daß die Ausnehmung oder der Schlitz (31) eine Materialausnehmung im Kanal (25) der Klaue (17) darstellt, so daß das Äußere der Klaue (17) unbeeinflußt ist.

7. Scheibenwischer nach einem der Ansprüche 4 oder 5, dadurch gekennzeichnet, daß die Bügelhebel aus Blech geformt sind und der Schlitz oder die Ausnehmung (31) durch eine Deformation des Metallbleches gebildet ist.

## Revendications

1. Lame d'essuie-glace comprenant une lame en caoutchouc moulé (1) ayant une saillie (21) venue de moulage et une armature comprenant un nombre d'étriers et/ou leviers articulés ensemble et ayant, à leurs extrémités libres, des paires de griffes (17) s'engageant autour de la partie de la lame en caoutchouc (1), caractérisée par le fait que les griffes (17) d'une paire définissent entre elles un canal (25) et une rainure ou fente (31) est formée dans la base (29) du canal (25) et est alignée avec la saillie (21) avec jeu, de telle sorte que la lame (1) soit libre de coulisser longitudinalement dans une griffe.

2. Lame d'essuie-glace selon la revendication 1, caractérisée par le fait que la lame en caoutchouc (1) est moulée de telle sorte que la saillie (21) soit positionnée en se projetant à partir de la face de la lame en caoutchouc (1) opposée à une lèvre (5) destinée à venir en engagement avec le pare-brise.

3. Lame d'essuie-glace selon la revendication 1 ou la revendication 2, caractérisée par le fait que les griffes (17) ont une section de canal (25) généralement surplombante, une partie (7) de la lame en caoutchouc (1) se trouvant dans le canal (25), alors que la partie (3) active de la lame en caoutchouc (1) se projette à partir de celui-ci.

4. Lame d'essuie-glace selon la revendication 3, caractérisée par le fait que la cavité ou fente (31) est formée de façon centrale dans la base (29) de la section de canal (25) et est orientée dans le sens de la longueur de la lame en caoutchouc (1), le canal (25) étant ouvert à ses deux extrémités.

5. Lame d'essuie-glace selon la revendication 4, caractérisée par le fait que l'une des griffes (17) est prévue sans la fente ou cavité (31), de telle sorte que le mouvement de la lame en caoutchouc (1) dans cette griffe (17) soit limité, empêchant la lame en caoutchouc (1) d'être retirée accidentellement de l'armature de la lame.

6. Lame d'essuie-glace selon l'une des revendications 4 ou 5, caractérisée par le fait que la cavité ou fente (31) est formée à l'intérieur du canal (25) de la griffe (17) de telle sorte que l'extérieur de la griffe (17) soit non affecté.

7. Lame d'essuie-glace selon l'une des revendications 4 ou 5, caractérisée par le fait que les leviers d'armature sont formés de feuille métallique et la fente ou cavité (31) est formée par déformation de la feuille métallique.
